# EUROPEAN PATENT SPECIFICATION

(11) **EP 0 923 877 B1**
(45) Date of publication and mention of the grant of the patent: **21.04.2004**
(21) Application number: 98500231.0
(22) Date of filing: 22.10.1998
(51) Int. Cl.: A23K 1/00

(54) **Process for obtaining granulated carob or animal feed or raw material for feed obtained with such a process**
Verfahren zur Herstellung von granulierter Johannisbrotpulpe oder Tierfutter oder rohes Futtermaterial hergestellt nach diesem Verfahren
Procédé d'obtention de pulpe de caroube granulé ou forrage pour animaux ou matières fourragères brutes pour animaux obtenues par un tel procédé

(30) Priority: 20.11.1997 ES 9702427; 20.11.1997 ES 9702428
(43) Date of publication of application: 23.06.1999
(73) Proprietor: Armengol Hermanos, S.A., 43764 El Catllar (Tarragona) (ES)
(72) Inventor: Armengol Vidal, Francesc, 43764 El Catllar (Tarragona) (ES); Armengol Mayol, Josep, 43764 El Catllar (Tarragona) (ES)
(74) Representative: Carpintero Lopez, Francisco

(56) References cited:
- EP-A- 0 616 780
- EP-A- 0 750 847
- GB-A- 395 990
- GB-A- 2 014 424
- US-A- 4 675 312
- US-A- 5 034 378
- A. PRIOLO ET AL.: "Effect of partially replacing dietary barley with 20% carob pulp on post-weaning growth, and carcass and meat characteristics of Comisana lambs" MEAT SCIENCE, vol. 50, no. 3, 1998, pages 355-363, XP002093876 GB
- F. GUESSOUS ET AL.: "Influence du taux d'incorporation de la pulpe de caroube ur la digestibilité et l'utilisation des rations par des ovins à l'engraissement" REPRODUCTION, NUTRITION, D VELOPPEMENT, vol. 28, no. 1, 1988, page 93-94 XP002093623 FR

## Description

### OBJECT OF THE INVENTION

The present invention relates to a process especially devised for obtaining a carob derivative which is useful as animal feed or as a feed component, in any granulated or pelletised formation, to improve its handling conditions.

The invention also relates to the product obtained with such a process, which may be used directly as animal feed, or as a component for balancing a particular diet or formula.

The object of the invention is obtaining a product which, besides the organoleptic characteristics attached to such a feed component derived from its own components, provides substantial advantages from the standpoint of uniformity and handling.

### BACKGROUND OF THE INVENTION

Carobs are known to have seeds which upon being eliminated leave a residue, a so-called "pulp" that is ground in the actual process for obtaining and separating the seeds, which pulp is useful in the field of animal feed as a feed balancer.

This carob pulp is usually included directly in animal feed, either with the extent of grinding obtained at the seed removal stage, or by subsequently grinding the same, which poses a problem due to its low density, which on the one hand directly affects carriage and storage costs and on the other poses functional problems in silos, consisting of clogging, vault formation, etc.

### DESCRIPTION OF THE INVENTION

The above-described drawbacks are overcome by pelletising and granulating the product, i.e. the carob pulp, for this brings about a substantial density increase thereof which reduces its volume and prevents clogging in silos and the like.

More specifically and in order to achieve the above, once the pulp has been ensiled and optionally mixed with additives or other raw materials for feed, the process starts with a grinding stage with different intensity levels, which may indeed be non-existent, depending on the extent to which the pulp has initially been ground. Water or steam may be added to the pulp before or at the grinding stage in order to provide the pulp with a sufficient degree of humidity.

The product then undergoes a pressure heating stage, using for instance a pelletising press, a granulator or any other suitable pressure system to such end, at which operative stage the heating causes part of the water content in the pulp to be evaporated and moreover grains or pellets of any cylindrical, prismatic-quadrangular, prismatic-hexagonal, spherical, and other shape to be obtained.

The pelletised product then undergoes a cooling and drying stage and is finally sacked or stored.

EP-A-0 616 780 discloses a process for production of a natural carob fibre comprising pressing of the waste pulp in the operation of extracting the sugars from carob pulp. The dry fibre is converted into flour by means of a traditional grinding process.

The invention also relates to the product resulting from such a process which is useful, as aforesaid, directly as feed or a component included to balance any food formula, taking the shape of perfectly uniform small cylinders, prisms, balls or the like, their density being considerably greater than that of the simply ground product and hence results in a dramatic volume reduction which has a favourable impact on the storage and carriage costs, and in turn favours handling thereof, avoiding such problems as clogging in silos and hoppers, as aforesaid, yielding a uniform product with a lesser humidity degree, at the same time as the actual residual humidity is more uniform, which has a positive effect on a reduced risk of fungal proliferation.

### DESCRIPTION OF THE DRAWINGS

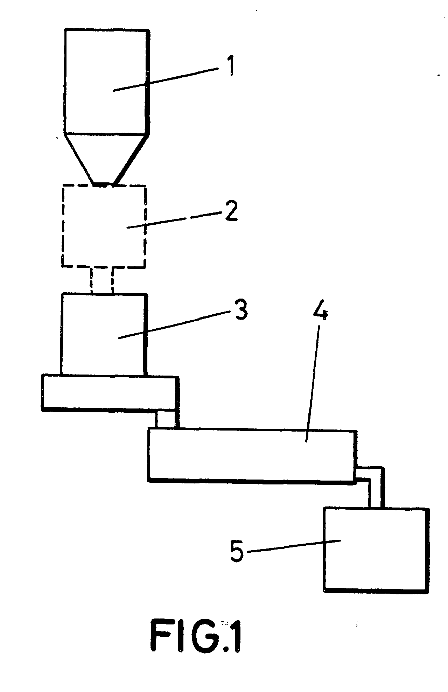

In order to provide a fuller description and contribute to the complete understanding of the characteristics of this invention, in accordance with a preferred embodiment thereof, a single sheet of drawings is attached as an integral part of the specification which, while purely illustrative and not fully comprehensive, shows in its only figure a plant for working the process for obtaining granulated carob subject of the invention.

### PREFERRED EMBODIMENT OF THE INVENTION

With reference to this figure, it follows that the carob, previously ground for removing its seeds, is housed within a silo (1) from which it passes duly metered to a mill (2) in which the grinding stage will take place to the desired extent, this being an optional stage, as aforesaid, because the extent to which the pulp arriving at the silo (1) is initially ground can be sufficient for the same to pass directly to the pelletising press (3) at which the heating and evaporation stage of part of the water content will take place, at the same time as the ground product is turned into a granulated, uniform product.

Similarly and depending on the degree of humidity, either before or at the actual mill (2), water or steam is added to the carob pulp, thereby contributing the required humidity to the carob pulp for the same to pass directly to said pelletising press (3).

Finally, the grains or pellets into which the ground carob pulp has been transformed are passed through a dryer (4) in which they are cooled and the water elimination process is completed, the product being duly conformed and dry, ready to pass to a sacker (5) or directly to the storage area thereof.

## Claims

1. A process for obtaining granulated carob, **characterised in that** the same starts with the ground carob pulp obtained at the previous seed removal stage, said pulp undergoing a pressure heating stage, preferably within a pelletising press or granulator, wherein the pulp is heated at the same time as part of its water content evaporates, the granulated pulp then passing to a cooling and drying stage after which it is stored, optionally with a prior sacking stage.

2. A process for obtaining granulated carob, as in claim 1, **characterised in that** the pulp optionally undergoes a grinding stage before the heating stage, which completes the previous grinding stage which takes place when the seeds are removed, and/or a water or steam contribution stage, before or at the actual grinding mill, which provides the pulp with a sufficient humidity before it passes to the pelletising press.

3. A process for obtaining granulated carob, as in preceding claims, **characterised in that** additives and/or other raw materials for feed are added to the carob pulp in order to adjust the end result, from a nutritional standpoint, to any set formula.

4. Animal feed or raw material for feed obtainable by the process of the previous claims, **characterised by** taking a pelletised shape, i.e. being shaped as small cylinders, prisms, balls or other like uniform geometric figures, in which the carob pulp is duly compacted and dried to maintain a stable formation and a considerably higher density than that of the initially ground carob pulp.

## Patentansprüche

1. Ein Verfahren zur Herstellung von gekörntem Johannisbrot, **dadurch gekennzeichnet, dass** dieses von dem Johannisbrotfruchtfleisch ausgeht, das man in der vorangegangenen Phase der Samenernte erhlält, wobei besagtes Fruchtfleisch einer Phase der Druckerhitzung unterzogen wird, vorzugsweise in einer Sinterpresse oder Körnungsvorrichtung, wobei das Fruchtfleisch erhitzt wird und gleichzeitig ein Teil seines Wasserinhalts verdampft, wonach das gekörnte Fruchtfleisch eine Kühlungs- und Trocknungsphase durchläuft und danach gelagert wird, wahlweise nach einer Phase, bei der es in Säcke verpackt wird.

2. Ein Verfahren zur Herstellung von gekörntem Johannisbrot gemäss Anspruch 1, **dadurch gekennzeichnet, dass** das Fruchtfleisch wahlweise einer Zerkleinerungsphase unterzogen wird vor der Erhitzungsphase, welche die Zerkleinerungsphase vervollständigt, die stattfindet, wenn die Samen geerntet werden und/oder eine Wasser- oder Dampfzufuhrphase vor oder bei der Zerkleinerungsmühle, die das Fruchtfleisch mit ausreichender Feuchtigkeit versorgt, bevor dieses zur Pelletspresse transportiert werden.

3. Ein Verfahren zur Herstellung von gekörntem Johannisbrot gemäss den vorangegangenen Ansprüchen, **dadurch gekennzeichnet, dass** dem Johannisbrotfruchtfleisch Zusätze und/oder anderen Rohmaterialien für Futter hinzugefügt werden, um das Endergebnis aus ernährungstechnischer Sicht jeder festgelegten Formel anzupassen.

4. Tierfutter oder Rohmaterial für Futter herstellbar durch das Verfahren der vorangegangenen Ansprüche, dadurch gekennzeicnet, dass es eine Pelletsform annimmt wie zum Beispiel in Form von kleinen Zylindern, Scheiben, Bällen oder anderen ähnlichen einheitlichen geometrischen Formen, in denen das Johannisbrotfruchtfleisch entsprechend kompaktiert und getrocknet wird, um eine stabile Struktur und eine beträchtlich höhere Dichte beizubehalten als das Ausgangsfruchtfleisch des Johannisbrots.

## Revendications

1. Un procédé d'obtention de caroube granulée, **caractérisé en ce que** celui-ci commence avec la pulpe de caroube broyée obtenue à l'étape antérieure d'élimination des graines, ladite pulpe étant soumise à une étape de réchauffement sous pression, de préférence dans une presse à pelletisation ou granuleuse, dans laquelle la pulpe est réchauffée en même temps qu'une partie de son contenu d'eau s'évapore, la pulpe granulée passant alors à une étape de refroidissement et de séchage après laquelle, elle est stockée, optionnellement avec une étape préalable d'ensachement.

2. Un procédé d'obtention de caroube granulée, selon la revendication 1, **caractérisé en ce que** la pulpe est optionnellement soumise à une étape de broyage avant l'étape de réchauffement, qui complète l'étape antérieure de broyage qui a lieu lors de l'élimination des graines, et/ou une étape d'apport d'eau ou de vapeur, avant ou à la broyeuse actuelle, qui fournit la pulpe avec une humidité suffisante avant de passer à la presse à pelletisation.

3. Un procédé d'obtention de caroube granulée, selon les revendications antérieures, **caractérisé en ce que** l'on ajoute des additifs et/ou d'autres matières premières pour l'alimentation, à la pulpe de caroube pour ajuster le résultat final, à des fins nutritionnelles, à toute formule déterminée.

4. Fourrage ou matière première pour l'alimentation pouvant être obtenu par le procédé des revendications antérieures, **caractérisé en ce qu'**il prend une forme pelletisée, c'est-à-dire sous forme de petits cylindres, prismes, boules ou d'autres figures géométriques uniformes, dans laquelle la pulpe de caroube est dûment compactée et séchée pour maintenir une formation stable et une densité considérablement plus élevée que celle de la pulpe de caroube initialement broyée,
